# EUROPÄISCHE PATENTANMELDUNG

(11) **EP 0 677 699 A1**
(43) Veröffentlichungstag der Anmeldung: **18.10.1995**
(21) Anmeldenummer: 94103309.4
(22) Anmeldetag: 04.03.1994
(51) Int. Cl.: F21V 23/06, F21V 19/00, F21S 3/02, H01R 33/94

(54) **Halterung für Leuchtstoffröhren**

(71) Anmelder: Korte, Heinrich, D-26810 Ihrhove (DE)
(72) Erfinder: Korte, Heinrich, D-26810 Ihrhove (DE)
(74) Vertreter: Thiel, Christian, Dr. Dipl.-Chem.

(57) **Zusammenfassung**

Die Erfindung betrifft eine Halterung für Leuchtstoffröhren mit zwei einander gegenüberliegenden, an Kopfstücken (2, 3) angeordneten Fassungen (4, 5) zur Aufnahme der Leuchtstoffröhre (6) und einem die Kopfstücke (2, 3) verbindenden Trägerelement (7), bei der jedes der Kopfstücke (2, 3) einen Stecksockel (8, 9) mit den Abmessungen eines üblichen Linien-Glühlampenstecksockels aufweist, wobei die zum Starten und Betreiben der Leuchtstoffröhre (6) erforderliche elektronische Schaltung in den Kopfstücken (2, 3) der Halterung (1) angeordnet ist und notwendige elektrische Verbindungen in oder am Trägerelement (7) verlaufen.

## Beschreibung

Die Erfindung betrifft eine Halterung für Leuchtstoffröhren mit zwei einander gegenüberliegenden, an Kopfstücken angeordneten Fassungen zur Aufnahme der Leuchtstoffröhre und einem die Kopfstücke verbindenden Trägerelement.

Die erfindungsgemäße Halterung ist dazu bestimmt, in übliche Halterungen von Linienglühlampen eingesetzt zu werden, damit diese mit energiesparenden Leuchtstoffröhren betrieben werden können.

Linienglühlampen sind seit langem bekannt. Sie werden vor allem über Spiegeln, in Bad, Küchen und Schlafraummöbeln, in Garderoben und Vitrinen, als Tisch- oder Klavierleuchten usw. vielfältig eingesetzt. Es handelt sich dabei um röhrenförmige Lichtquellen, die mit Widerrstandsglühdrähten ausgerüstet sind, also nicht auf dem Leuchtstoffröhrenprinzip basieren, und zum Anschluß an die Spannungsquelle mit zwei räumlich weit voneinander getrennten Anschlußsockeln ausgestattet sind, die in entsprechende Steckfassungen eines Gehäuses eingreifen.

Infolge des Trends zur Einsparung von Energiekosten werden auch in privaten Haushalten Glühlampen auf der Basis von Widerstands-Glühdrähten immer mehr durch Leuchtstoffröhren mit einem um ein Vielfaches geringeren Energieverbrauch ersetzt. Dies gilt vor allem für herkömmliche Glühbirnen, seit verschiedene Systeme von sogenannten Sparlampen angeboten werden, die in vorhandene Glühbirnenfassungen eingeschraubt werden können.

Von diesen Bemühungen um Energieeinsparung sind die Linienglühlampen, die wie herkömmliche Glühbirnen bei relativ hohem Energieverbrauch nur eine relativ geringe Lichtausbeute ergeben, bisher ausgenommen geblieben. Zwar sind Leuchtstoffröhren bekannt, die ihrer Größe nach die Linienlampen ersetzen könnten, jedoch haben die zum Zünden und zum Betrieb der Leuchtstoffröhren notwendigen zusätzlichen Bauelemente und die relativ komplizierte Verbindungsmechanik für den elektrischen Anschluß von Linienglühlampen einen Austausch bislang verhindert. Insbesondere stellen die Unterbringung des zum Betrieb einer Leuchtstoffröhre notwendigen Vorschaltgeräts und die räumliche Entfernung der Anschlußsockel Probleme dar, die bislang noch nicht gelöst wurden.

Es ist deshalb Aufgabe der Erfindung, eine Vorrichtung bereitzustellen, die den Austausch vorhandener Linienglühlampen gegen entsprechend dimensionierte übliche Leuchtstoffröhren erlaubt, ohne daß das Gehäuse oder die Halterung der Linienglühlampe geändert werden müßte.

Diese Aufgabe wird mit einer Halterung der eingangs genannten Art gelöst, bei der jedes der Kopfstücke einen Stecksockel mit den Abmessungen eines üblichen Linien-Glühlampenstecksockels aufweist, wobei die zum Starten und Betreiben der Leuchtstoffröhre erforderliche elektronische Schaltung in den Kopfstücken der Halterung angeordnet ist und notwendige elektrische Verbindungen im oder am Trägerelement verlaufen.

Dabei weisen die an der Halterung vorhandenen Stecksockel insbesondere einen Abstand zueinander auf, der dem Abstand der Stecksockel einer üblichen Linienglühlampe entspricht.

Es ist besonders zweckmäßig, wenn die erfindungsgemäße Halterung - mit eingesetzter Leuchtstoffröhre - Abmessungen aufweist, die im wesentlichen den Abmessungen einer üblichen Linienglühlampe entspricht. Dies ermöglicht den Einbau der erfindungsgemäßen Halterung in vorhandene Halterungen bzw. Gehäuse für Linienglühlampen, ohne daß sich die Abmessungen der Gesamtleuchte nennenswert verändern, was bei Einbau- und Unterschrankleuchten wesentlich ist.

Die erfindungsgemäße Halterung ist insbesondere geeignet für sogenannte Miniatur-Leuchtstoffröhren mit einer Leistungsaufnahme von 6 W bis 35 W. Der in der erfindungsgemäßen Halterung eingebaute Sockel ist zweckmäßigerweise ein Sockel vom Typ S 14s, wie er in üblichen Linienglühlampen vorhanden ist. Es kann aber auch ein beliebiger anderer Stecksockel verwandt werden, sofern er in die bei üblichen Stecksockeln von Linienglühlampen zum Einsatz kommenden Steckfassungen einsetzbar ist.

Das die Kopfstücke verbindende Trägerelement der erfindungsgemäßen Halterung ist zweckmäßigerweise als Zylinderabschnitt- oder wannenförmiger Materialstreifen ausgebildet, der sich dimensionsmäßig an die Leuchtmittelseite des Gehäuses oder der Halterung einer herkömmlichen Linienglühlampe eng anschmiegen kann. Grund für diese Maßnahme ist, daß der starre Materialstreifen in der Lage sein muß, die leuchtmittelseitig am Gehäuse einer Linienglühlampe vorgesehenen Sicherungsstifte einzudrücken, um den elektrischen Kontakt zwischen Stecksockel und Steckfassung herzustellen.

Erfindungsgemäß kann ferner vorgesehen sein, daß das Trägerelement unter Einbeziehung der Kopfstücke als Gesamtgehäuse ausgebildet ist, wobei das Leuchtfeld freibleibt. In diesem Fall ist es zweckmäßig, eine transparente Leuchtfeldabdeckung vorzusehen. Eine solche Leuchtfeldabdeckung kann beispielsweise mit Hilfe von Rastelementen auf die Fassungen zur Aufnahme der Leuchtstoffröhre aufgesteckt werden.

Die erfindungsgemäße Halterung wird zweckmäßigerweise aus einem üblichen Kunststoffmaterial hergestellt, was auch den sicherheitstechnischen Anforderungen entgegenkommt. Unabhängig davon können für einzelne Elemente, wie die Fassungen, beliebige andere geeignete Materialien verwandt werden.

Die Erfindung betrifft schließlich auch eine Halterung der vorstehend beschriebenen Art mit eingesetzter Leuchtstoffröhre, insbesondere Miniatur-Leuchtstoffröhre.

Die Erfindung wird durch die anliegenden Abb. 1 bis 4 näher erläutert. Von diesen Abbildungen zeigt
- Fig. 1: eine herkömmliche Linienglühlampe;
- Fig. 2: eine Halterung für eine herkömmliche Linienglühlampe mit eingesetzter Linienglühlampe in seitlicher und Frontalansicht;
- Fig. 3: eine herkömmliche Halterung für eine Linienglühlampe mit eingesetzter erfindungsgemäßer Halterung und Leuchstoffröhre in seitlicher und Frontalansicht; und
- Fig. 4: eine erfindungsgemäße Halterung, wie er in die in Fig. 2 und 3 gezeigte Halterung für eine Linienglühlampe eingesetzt werden kann.

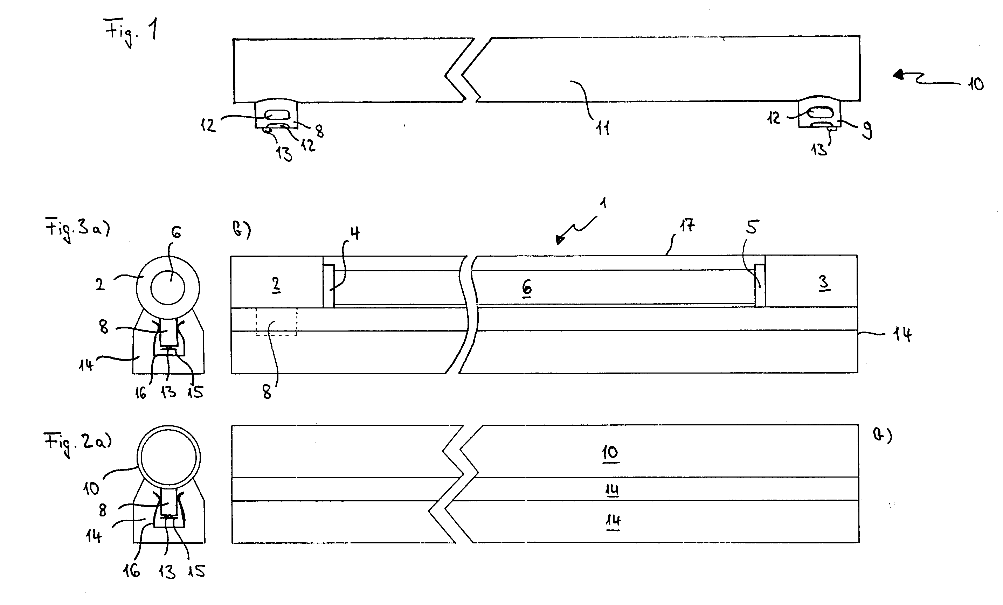

Fig. 1 zeigt eine herkömmliche Linienglühlampe 10 in seitlicher Ansicht, die aus dem röhrenförmigen Glaskörper 11 mit dem darin verlaufenden Widerstands-Glühdraht und den beiden Stecksockeln 8 und 9 steht. An den Stecksockeln 8 und 9 sind Rastelemente 12 vorgesehen sowie Kontaktknöpfe 13, die den elektrischen Kontakt mit in den zugehörigen Steckfassungen der Halterung oder des Gehäuses verlaufenden Kontaktelementen herstellen sollen. Bei den Rastelementen handelt es sich um Vertiefungen auf der Oberfläche des Stecksockels, die mit entsprechenden Federelementen in der Steckfassung der Halterung bzw. des Gehäuses zusammenwirken.

Fig. 2 zeigt eine herkömmliche Linienglühlampe 10 eingesetzt in ihrer Halterung bzw. Fassung 14. Die eingesetzte Linienglühlampe 10 rastet dabei mit ihrem Stecksockel 8 in die aus einem Federelement 16 gebildete Steckfassung des Gehäuses 14, wobei ein elektrisch leitender Kontakt zwischen dem Kontaktknopf 13 und einem federnden Kontaktelement 15 hergestellt wird. Dieses federnde Kontaktelement 15 wird von einem nicht dargestellten Sicherungsstift in eine Position gedrückt, die den Kontakt zwischen den elektrischen Zuleitungen und der Linienglühlampe sichert. Bei nicht eingesetzter Linienglühlampe entlastet der Sicherungsstift die Kontaktfeder 13, so daß die Steckfassung stromlos wird. Es handelt sich dabei um ein bekanntes und seit langem eingeführtes Sicherungsprinzip für Linienglühlampen.

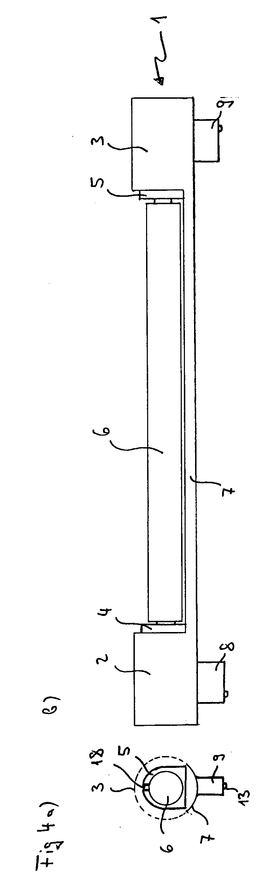

Fig. 3 zeigt die Halterung bzw. das Gehäuse 14 einer üblichen Linienglühlampe mit eingesetzter erfindungsgemäßer Halterung 1 und Leuchtstoffröhre 6. Die Leuchtstoffröhre 6 wird von Fassungen 4 und 5 gehalten, die ihrerseits an Kopfstücken 2 und 3 gelagert sind. Die Kopfstücke weisen an ihrer Unterseite die von der Linienglühlampe aus Fig. 1 bekannten Stecksockel 8 und 9 auf - in Fig. 3a dargestellt, in Fig. 3b angedeutet -, die in die Steckfassungen 16 der Linienglühlampen-Halterung 14 eingesteckt werden und dort auf übliche Weise den Kontakt zwischen Kontaktknopf 13 und Kontaktfeder 15 herstellen - s. Fig. 3a. Die zum Betrieb der Leuchtstoffröhre 6 erforderlichen elektronischen Schaltungen befinden sich in den Kopfstücken 2 und 3, notwenige elektrische Verbindungsleitungen werden im oder entlang dem nicht gezeigten Trägerelement geführt. Eine mit 17 bezeichnete Leuchtfeldabdeckung schützt die Leuchtstoffröhre 6 vor Verschmutzung.

Aus der Darstellung ist ersichtlich, daß die Halterung 1 mit eingesetzter Leuchtstoffröhre 6 und Leuchtfeldabdeckung 17 im wesentlichen die gleichen Dimensionen hat, wie die in Fig. 1 bzw. 2 gezeigte Linienglühlampe 10.

Fig. 4 zeigt eine erfindungsgemäße Halterung 1 in seitlicher und Frontalansicht. Zwei Kopfstücke 2 und 3 werden durch eine Trägerschiene 7, die wannen- oder zylinderabschnittförmig ausgebildet ist, miteinander verbunden. Auf der Innenseite der Kopfstücke 2 und 3 befinden sich die Fassungen 4 und 5 für die Leuchtstoffröhre 6, die auf übliche Weise ausgebildet sind und einen Einsteckschlitz 18 an der Oberseite aufweisen, wie in Fig. 4a dargestellt. Unterhalb der Kopfstücke 2 und 3, die in der hier beschriebenen Ausführungsform einstückig mit dem Trägerelement 7 ausgebildet sind, befinden sich die Stecksockel 8 und 9 zum Einschieben in die dafür vorgesehenen Steckfassungen. Die Leuchtstoffröhre 6 ist eine übliche Miniatur-Leuchstoffröhre mit zwei Kontaktstiften an jeder Seite, die durch Schlitze 18 in dafür übliche Fassungen 4 und 5 eingeschoben werden, s. Fig. 4a. Aus Fig. 4a ist auch die zylinderabschnitt- oder wannenförmige Gestaltung des Trägerelements 7 zu ersehen, das die untere Begrenzung der erfindungsgemäßen Halterung darstellt; aus Gründen der Übersichtlichtkeit und zur Unterscheidung ist das hintere Kopfstück 3, das aus der Trägerschiene 7 hervorgeht, gestrichelt dargestellt.

Aus fertigungstechnischen Gründen wie auch aus Gründen der Zugänglichkeit kann es zweckmäßig sein, die Kopfstücke 3 als auf das Trägerelement 7 aufschiebbare oder aufsteckbare Gehäusestücke auszubilden. Hiermit wird zum einen die Montage der elektrischen Einrichtung erleichtert, zum anderen aber auch ermöglicht, daß ein defektes Vorschaltgerät ausgetauscht werden kann.

Die auf diese Art und Weise konstruierten Halterungen für Leuchtstoffröhren haben den Vorzug, daß sie den gleichen Raumbedarf bei gleicher Lage und Form der Verbindungselemente wie bekannte Linienglühlampen mit Widerstands-Glühdrähten besitzen. Dadurch ist der Austausch einer Linienglühlampe mit hohem Energieverbrauch gegen eine energiesparende Leuchtstoffröhre jederzeit und durch jedermann möglich. Neben der hohen Energieeinsparung haben die erfindungsgemäßen Steckleuchten mit Leuchstoffröhre den Vorteil, daß bei ihrem Gebrauch nur wenig Wärme entsteht und daß sie eine wesentlich höhere Überlebensdauer besitzen. Auch braucht bei Ausfall der in der Halterung gehaltenen Norm-Leuchtstoffröhre nur diese ersetzt zu werden.

## Patentansprüche

1. Halterung (1) für Leuchtstoffröhren mit zwei einander gegenüberliegenden, an Kopfstücken (2, 3) angeordneten Fassungen (4, 5) zur Aufnahme der Leuchtstoffröhre (6) und einem die Kopfstücke (2, 3) verbindenden Trägerelement (7), dadurch gekennzeichnet, daß jedes der Kopfstücke (2, 3) einen Stecksockel (8, 9) mit den Abmessungen eines üblichen Linien-Glühlampenstecksockels aufweist, wobei die zum Starten und Betreiben der Leuchtstoffröhre (6) erforderliche elektronische Schaltung in den Kopfstücken (2, 3) der Halterung (1) angeordnet ist und notwendige elektrische Verbindungen in oder am Trägerelement (7) verlaufen.

2. Halterung nach Anspruch 1, dadurch gekennzeichnet, daß die Stecksockel (8, 9) einen Abstand zueinander aufweisen, der dem Abstand der Stecksockel einer üblichen Linienglühlampe entspricht.

3. Halterung nach einem der vorstehenden Ansprüche, dadurch gekennzeichnet, daß sie äußere Abmessungen aufweist, die im wesentlichen denen einer üblichen Linienglühlampe entsprechen.

4. Halterung nach einem der vorstehenden Ansprüche, dadurch gekennzeichnet, daß die zur Aufnahme vorgesehene Leuchtstoffröhre (6) eine Miniatur-Leuchtstoffröhre von 6 W bis 35 W ist.

5. Halterung nach einem der vorstehenden Ansprüche, gekennzeichnet durch Stecksockel vom Typ S 14s.

6. Halterung nach einem der vorstehenden Ansprüche, dadurch gekennzeichnet, daß das Trägerelement (7) als zylinderabschnittförmiger starrer Materialstreifen ausgebildet ist, der sich leuchtmittelseitig eng an das Gehäuse einer Linienglühlampe anschmiegen kann und dort befindliche Sicherungsstifte betätigt.

7. Halterung nach einem der vorstehenden Ansprüche, gekennzeichnet durch eine abnehmbare Leuchtfeldabdeckung.

8. Halterung nach einem der vorstehenden Ansprüche, dadurch gekennzeichnet, daß das Trägerelement (7) als die Kopfstücke (2, 3) einbeziehendes Gehäuse ausgebildet ist, daß das Leuchtfeld freiläßt.

9. Halterung nach einem der vorstehenden Ansprüche mit eingesetzter Miniatur-Leuchtstoffröhre.
